# EUROPÄISCHE PATENTSCHRIFT

(11) **EP 0 499 791 B1**
(45) Veröffentlichungstag und Bekanntmachung des Hinweises auf die Patenterteilung: **07.12.1994**
(21) Anmeldenummer: 92100711.8
(22) Anmeldetag: 17.01.1992
(51) Int. Cl.: F16G 13/16, F16L 3/01

(54) **Energieführungskette**
Supporting chain for energy carriers
Chaise porteuse pour lignes de transport d'énergie

(30) Priorität: 22.02.1991 DE 4105652
(43) Veröffentlichungstag der Anmeldung: 26.08.1992
(73) Patentinhaber: Kabelschlepp Gesellschaft mit beschränkter Haftung, 57074 Siegen (DE)
(72) Erfinder: Wehler, Herbert, Dipl.-Ing., W-5908 Neunkirchen (DE); Mack, Paul-Werner, W-5963 Wenden (DE); Weber, Willibald, W-5902 Netphen (DE)
(74) Vertreter: Kahlhöfer, Hermann, Dipl.-Phys.

(56) Entgegenhaltungen:
- EP-A- 0 161 417
- EP-A- 0 286 442
- DE-C- 3 408 912
- DE-U- 8 513 491
- DE-U- 8 910 217
- DE-U- 9 102 121
- DE-U- 9 102 122

## Beschreibung

Die Erfindung betrifft eine Energieführungskette zum Führen von Energieleitern, insbesondere Kabel oder Schläuche von einem festen Anschluß zu einem beweglichen Verbraucher, bestehend aus einer Vielzahl von Kettengliedern, die aus zwei im Abstand voneinander und parallel zueinander angeordneten Kettenlaschen, zwei die Kettenlaschen untereinander verbindenden Traversen und mindestens einem zwischen den Traversen angeordneten Trennsteg bestehen.

Derartige Energieführungsketten sind bekannt. Beispielsweise ist aus dem DE-GM 89 10 217 eine gattungsgemäße Energieführungskette bekannt mit einen teilbaren Steg, der aus wenigstens zwei Traversen, quer dazu zwischen diesen angeordneten Trennstegen und zwischen diesen parallel zu den Traversen angeordneten Sprossen besteht. Diese vorbekannte Energieführungskette ist für die Führung von Energieleitungen in verschiedenen, getrennt voneinander angeordneten Kanälen innerhalb des Energieleitungskanals sehr gut geeignet. Jedoch sind bei dieser Energieführungskette die Trennstege in Längsrichtung der Traversen unverschiebbar angeordnet, so daß eine Veränderung der Abstände zwischen den Trennstegen nur dann möglich ist, wenn die Energieführungskette teilweise demontiert wird.

Ausgehend von diesem Stand der Technik liegt der Erfindung die **Aufgabe** zugrunde, eine Energieführungskette zu schaffen, deren Energieleitungskanal mit Trennstegen unterteilbar ist, welche in einfacher Weise wahlweise unverschiebbar oder verschiebbar in dem Energieleitungskanal angeordnet werden können.

Als technische **Lösung** wird erfindungsgemäß vorgeschlagen, daß die Traversen auf einer Seite eine in Längsrichtung verlaufende Nut haben, daß in der Nut eine Vielzahl von Bohrungen angeordnet ist und daß der Trennsteg an seinem oberen und unteren Ende eine Halterung mit wenigstens einem Stift aufweist, dessen Länge der Tiefe der Nut entspricht.

Eine nach der erfindungsgemäßen Lehre ausgebildete Energieführungskette hat den **Vorteil,** daß die Traversen in einfacher Weise derart zwischen den Kettenlaschen eingebaut werden können, daß einerseits die in den Traversen angeordneten Nuten in Richtung des Energieführungskanals und andererseits nach außen angeordnet sind. Bei der ersten Möglichkeit werden die Trennstege lediglich durch ihre am oberen und unteren Ende angeordnete Halterung mit den Traversen verbunden. Da die in den Halterungen angeordneten Stifte nur eine der Tiefe der Nuten entsprechende Länge aufweisen, sind die Trennstege in Längsrichtung der Traversen verschiebbar. Werden nun die Traversen gedreht, so daß die Nuten nach außen zeigen, greifen die Stifte in die korrespondierenden Bohrungen der Traversen ein, so daß die Trennstege nunmehr in axialer Richtung der Traversen unverschiebbar gehalten sind. Demzufolge bietet die erfindungsgemäße Energieführungskette eine Vielzahl von Anwendungsmöglichkeiten.

Bei einer bevorzugten Weiterbildung der erfindungsgemäßen Energieführungskette weisen die Traversen auf ihrer Gesamtlänge einen abgeflachten Querschnitt auf und sind in korrespondierende Halterungen der Kettenlaschen form- und kraftschlüssig eindrehbar. Die Ausgestaltung der Traversen mit einem auf ihrer Gesamtlänge abgeflachten Querschnitt hat den Vorteil, daß die Traversen in einfacher Weise hergestellt und entsprechend den gewünschten Abmessungen abgelängt oder auf entsprechende Länge hergestellt werden können. Ferner wird durch diese Ausbildung eine flache Bauweise der Kettenglieder mit einem maximal großen Energieführungskanal ermöglicht.

Die Halterung des Trennstegs ist bei einer Weiterentwicklung der erfindungsgemäßen Energieführungskette U-förmig ausgebildet und hat Hinterschneidungen, in die die Traverse einsteckbar ist. Bei dieser Ausbildung ist die Traverse in einfacher Weise mit der Halterung des Trennstegs verbunden, so daß sich die Traverse auch bei größeren Beanspruchungen nicht von dem Kettenglied lösen kann. Die Befestigung der Traverse an dem Trennsteg und auch an den Kettenlaschen erfolgt bei der erfindungsgemäßen Energieführungskette ohne Schrauben oder andere Befestigungsmittel.

Schließlich wird vorgeschlagen, daß die Halterung zwei Schenkel hat, die quer zur Längsrichtung des Trennsteges federelastisch sind, und daß der Stift auf dem Trennsteg in gleichem Abstand von den Schenkeln angeordnet ist. Die federelastischen Schenkel sorgen für ein leichtes Einsetzen und Herausnehmen der Traversen aus den bzw. in die Halterungen der Trennstege. Ferner bieten die federelastischen Schenkel einen sicheren Halt der eingesetzten Traversen. Der in gleichem Abstand von den Schenkeln auf dem Trennsteg angeordnete Stift erlaubt den Einbau der Traversen ohne eine bestimmte Orientierung beachten zu müssen. Somit kann die Energieführungskette in einfacher Weise auch maschinell zusammengebaut werden.

Weitere Einzelheiten und Vorteile ergeben sich aus der nachfolgenden Beschreibung der zugehörigen Zeichnungen, in denen eine bevorzugte Ausführungsform einer Energieführungskette mit erfindungsgemäßen Traversen dargestellt worden ist. In den Zeichnungen zeigen:

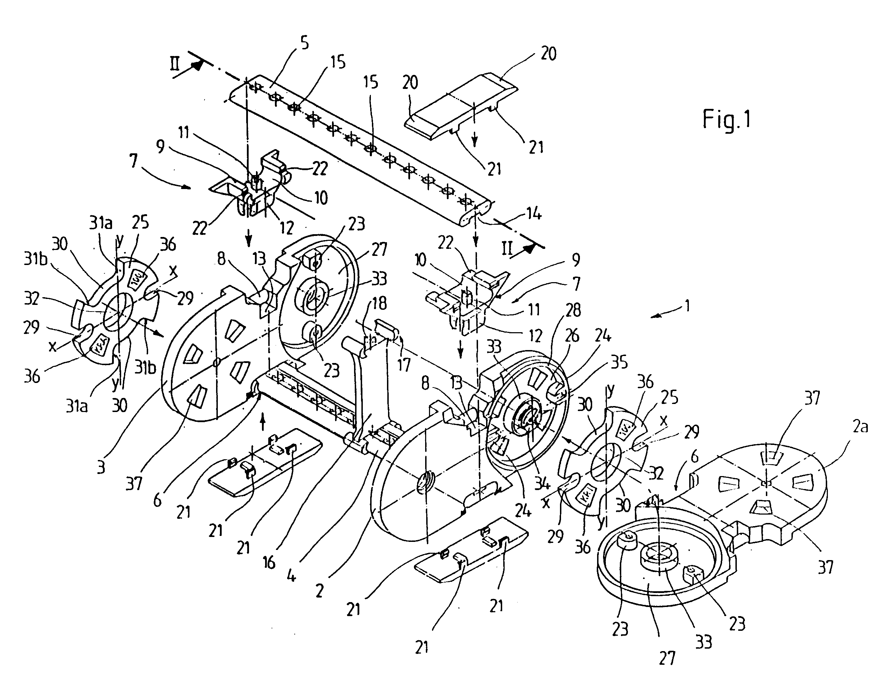

- Fig. 1: ein Sprengbild eines Kettengliedes einer Energieführungskette in perspektivischer Darstellung;
- Fig. 2: ein Sprengbild des Kettengliedes gemäß Fig. 1 mit einem in Längsrichtung der Traversen verschiebbar angeordneten Trennsteg in einer geschnittenen Seitenansicht entlang der Linie II-II;
- Fig. 3: den Trennsteg gemäß Fig. 2 in einer Seitenansicht entlang der Linie III-III;
- Fig. 4: das Kettenglied gemäß den Figuren 1 und 2 mit einem in Längsrichtung der Traversen unverschiebbar angeordneten Trennsteg in einer geschnittenen Seitenansicht und
- Fig. 5: den in das Kettenglied eingesetzten Trennsteg gemäß Fig. 4 in einer Seitenansicht entlang der Linie V-V.

Ein Kettenglied 1 besteht aus zwei im Abstand voneinander und parallel zueinander angeordneten Kettenlaschen 2 und 3, die mit Traversen 4 und 5 untereinander verbunden sind. Die Traverse 4 hat auf ihrer Gesamtlänge einen abgeflachten Querschnitt mit abgerundeten Schmalseiten und kann in mit Hinterschneidungen versehene angeschnittene Ausnehmungen 6 in den Schmalseiten der Kettenlaschen 2 und 3 eingelegt und durch Verdrehen um ihre Längsachse kraft- und formschlüssig mit den Kettenlaschen 2, 3 verbunden werden. Die Traverse 5 hat ebenfalls auf ihrer gesamten Länge einen abgeflachten Querschnitt mit abgerundeten Schmalseiten und kann in schwenkbar an den Schmalseiten der Kettenlaschen 2 und 3 angeordneten Drehgelenken 7 eingelegt werden.

Die Drehgelenke 7 bestehen aus einem, in einer der Kettenlaschen 2, 3 angeordnetem Zapfen 8 und einer darauf schwenkbar aufgesteckten Halterung 9, welche eine im wesentlichen U-förmige Ausnehmung 10 hat. In dieser Ausnehmung 10, in der die Traverse 5 durch Verdrehen um ihre Längsachse kraft- und formschlüssig mit der Halterung 9 verbunden wird, ist ein Stift 11 angeordnet. Die Halterung 9 hat ferner an ihrer Unterseite eine Federklammer 12, mit der die Halterung 9 auf den in einer Ausnehmung 13 und in Längsrichtung der Kettenlasche 2, 3 verlaufenden Zapfen 8 gesteckt ist.

Die Traversen 4 und 5 haben auf ihrer gesamten Länge einen abgeflachten Querschnitt mit abgerundeten Schmalseiten. In jeweils einer Seite der Traversen 4 und 5 ist eine in Längsrichtung der Traverse 4, 5 verlaufende Nut 14 angeordnet. Ferner weisen die Traversen 4 und 5 eine Vielzahl von Bohrungen 15 auf. In die beiden äußeren Bohrungen 15 der Traverse 5 greifen bei in die Halterung 9 eingedrehter Traverse 5 die Stifte 11 ein, so daß die Traverse 5 quer zur Längsrichtung des Kettengliedes 1 unverschiebbar gehalten ist. Die Traversen 4 und 5 können wahlweise derart an den Kettenlaschen 2, 3 befestigt werden, daß die Nuten 14 nach innen oder nach außen gerichtet angeordnet sind.

Zwischen den Traversen 4, 5 ist ein Trennsteg 16 angeordnet, der am oberen und unteren Ende mit U-förmigen Halterungen 17 versehen ist, in welchen Stifte 18 für den Eingriff in die Bohrungen 15 der Traversen 4, 5 befestigt sind. Die Länge der Stifte 18 entspricht der Tiefe der Nut 14. Auf diese Weise ist der Trennsteg 16 in Längsrichtung der Traversen 4, 5 verschiebbar, wenn die Traversen 4, 5 mit nach innen gerichteten Nuten 14 befestigt sind. Sind die Nuten 14 der Traversen 4, 5 nach außen gedreht, greifen die Stifte 18 des Trennstegs 16 in die Bohrungen 15 der Traversen 4, 5, so daß der Trennsteg 16 nicht in Längsrichtung der Traversen 4, 5 verschiebbar ist. Es ist auch möglich, mehrere Trennstege 16 zwischen den Traversen 4, 5 eines Kettengliedes 1 einzusetzen.

An den oberen und unteren Schmalseiten der Kettenlaschen 2, 3 sind Gleitkufen 19 lösbar befestigt, die aufeinander gleiten, wenn das obere Trum einer Energieführungskette sich auf dem unteren Trum abstützt. Dabei ist die Länge der Gleitkufen 19 so bemessen, daß die Abstände zwischen den Gleitkufen 19 benachbarter Kettenlaschen 2, 2a überbrückt werden. Die Gleitkufen sind an der unteren Schmalseite der Kettenlaschen 2, 3 unmittelbar und an den oberen Schmalseiten der Kettenlaschen 2, 3 mittelbar befestigt, nämlich an der Halterung 9 des Drehgelenks 7.

Jede Gleitkufe 19 ist plattenförmig ausgebildet und hat an ihrer den Schmalseiten der Kettenlaschen 2, 3 abgewandten Oberfläche zwei in Längsrichtung angeordnete Abschrägungen 20. An der Unterseite der Gleitkufen 19 sind vier Rastelemente 21 angeordnet, die in entsprechende Ausnehmungen 22 an den Kettenlaschen 2, 3 bzw. an den Halterungen 9 einschiebbar sind.

Der gegenseitige Schwenkwinkel benachbarter Kettenglieder wird durch Anschlagnocken 23 und 24 und einen Anschlageinsatz 25 begrenzt. Die Anschlagnocken 24 der Kettenlasche 2 sind in einer Ausnehmung 26 der Kettenlasche 2 angeordnet und in Längsrichtung der Kettenlasche 2 ausgerichtet. Die Anschlagnocken 23 an einem Ende der Kettenlasche 2a sind im Vergleich zu den Anschlagnocken 24 am anderen Ende der gleichen Kettenlasche 2a um 90° versetzt in entsprechenden Ausnehmungen 26, 27 angeordnet. Demzufolge steht die Verbindungslinie zwischen den Anschlagnocken 23 rechtwinklig zu der Längsachse des Kettengliedes 2a, während die beiden anderen Anschlagnocken 24 auf der Längsachse der Kettenlasche 2a liegen. Die Kettenlaschen 2, 3 haben einen die Ausnehmung 26 umgreifenden Rand 28, dessen Außendurchmesser geringfügig kleiner als der Innendurchmesser der kreisförmigen Ausnehmung 27 ist, in welche der Rand 28 eingreift.

Der zwischen den benachbarten Kettenlaschen 2 und 2a in die Ausnehmungen 26, 27 eingesetzte Anschlageinsatz 25 ist im wesentlichen zylindrisch ausgebildet. Der Anschlageinsatz 25 hat zwei diametral gegenüberliegende Schlitze 29 und zwei Ausnehmungen 30. Die Schlitze 29 haben eine den Anschlagnocken 23 bzw. 24 entsprechende Breite, wogegen sich die Ausnehmungen 30 über einen den Schwenkwinkel benachbarter Kettenglieder bestimmenden Kreisbogenabschnitt erstrecken. Die Ausnehmungen 30 haben jeweils eine Anschlagfläche 31a und eine Anschlagfläche 31b, wobei auch die Anschlagflächen 31a und 31b jeweils diametral gegenüberliegend an dem Anschlageinsatz 25 angeordnet sind. In dem dargestellten Ausführungsbeispiel sind die Anschlagflächen 31a um 90° im mathematisch positiven Drehsinn versetzt zu den Schlitzen 29 angeordnet. Der Winkel zwischen den Anschlagflächen 31a und 31b beträgt in dem dargestellten Ausführungsbeispiel ungefähr 60°.

Die Anschlageinsätze 25 haben eine zentrale Bohrung 32 durch die entsprechende, in den Ausnehmungen 26, 27 angeordnete Zapfen 33 greifen. Die Kettenlaschen 2, 2a benachbarter Kettenglieder werden mittels Verbindungselementen 34 miteinander verbunden, wobei die Anschlageinsätze 25 derart in der Ausnehmung 26 bzw. 27 der Kettenlaschen 2, 2a angeordnet sind, daß die Schlitze 29, den Anschlagnocken 24 umgreifen, der einen in radialer Richtung der Ausnehmung 26 verlaufenden Schlitz 35 aufweist. Hierdurch ist der Anschlageinsatz 25 unverdrehbar in der Kettenlasche 2 gehalten. Bei dieser Anordnung sind die Anschlagnocken 23 in der Kettenlasche 2a in den diametral gegenüberliegenden Ausnehmungen 30 des Anschlageinsatzes 25 geführt. Durch die Anschlagflächen 31a und 31b wird der gegenseitige Schwenkwinkel zwischen dem Kettenglied 1 und einem nur durch die Kettenlasche 2a dargestellten benachbarten Kettenglied begrenzt. Durch die rechtwinklige Anordnung der Anschlagflächen 31a zu den Schlitzen 29 und der Ausbildung der Ausnehmung 30 können die benachbarten Kettenglieder aus einer gestreckten Lage nur in eine Richtung um einen dem Winkel der Ausnehmung 30 entsprechenden Winkel verschwenkt werden. Um die Verschwenkrichtung der Kettenglieder zueinander zu verändern, ist es lediglich notwendig, die Anschlageinsätze 25 um 180° um eine ihrer Achsen X oder Y verdreht in die Ausnehmungen 26, 27 einzulegen.

Zur Anzeige der Schwenkrichtung und des Schwenkwinkels haben die vorzugsweise aus Kunststoff bestehenden Anschlageinsätze 25 eingeformte Kennzeichnungen 36, welche durch entsprechende Öffnungen 37 in den Kettenlaschen 2, 3, 2a erkennbar sind.

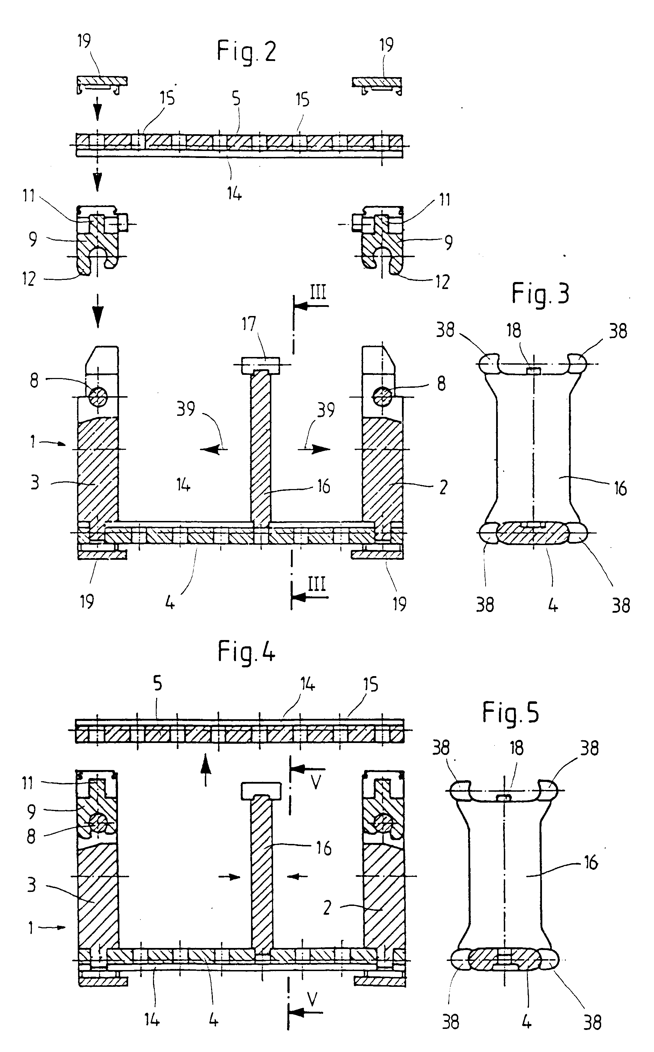

In der Fig. 2 ist das Kettenglied 1 dargestellt, wobei die Traversen 4 und 5 derart an den Kettenlaschen 2 und 3 befestigt sind, daß die Nuten 14 der Traversen 4, 5 zum Energieführungskanal hin ausgerichtet sind. Der Trennsteg 16 hat an seinem oberen und unteren Ende zwei federelastische Schenkel 38, welche die Halterung 17 bilden und die, einen abgeflachten Querschnitt aufweisenden Traversen 4, 5 umgreifen. Zwischen den Schenkeln 38 sind die Stifte 18 auf dem Trennsteg 16 in jeweils gleichem Abstand von den Schenkeln 38 angeordnet. Es ist in Fig. 2 zu erkennen, daß die Stifte 18 eine Länge aufweisen, welche der Tiefe der Nut 14 entspricht, so daß sie nicht bis in die in der Nut 14 angeordneten Bohrungen 15 reichen. Demzufolge ist der Trennsteg 16 in Längsrichtung der Traversen 4, 5 verschiebbar. Diese Verschiebbarkeit ist durch zwei Pfeile 39 in Fig. 2 angedeutet.

In Fig. 4 ist das der Fig. 2 entsprechende Kettenglied 1 dargestellt, wobei jedoch in Fig. 4 die Traversen 4, 5 derart an den Kettenlaschen 2, 3 befestigt sind, daß die Nuten 14 der Traversen 4, 5 nach außen gerichtet sind. Es ist insbesondere in Fig. 5 aber auch in Fig. 4 erkennbar, daß bei diesem Kettenglied 1 der Trennsteg 16 mit den Stiften 18 in den Bohrungen 15 der Traversen 4, 5 fixiert ist, so daß der Trennsteg 16 in Längsrichtung der Traversen unverschiebbar gehalten ist.

| **Bezugszeichenliste** | | | |
|---|---|---|---|
| 1 | Kettenglied | 31a | Anschlagfläche |
| 2 | Kettenlasche | 31b | Anschlagfläche |
| 2a | Kettenlasche | 32 | Bohrung |
| 3 | Kettenlasche | 33 | Zapfen |
| 4 | Traverse | 34 | Verbindungselement |
| 5 | Traverse | 35 | Schlitz |
| 6 | Ausnehmung | 36 | Kennzeichnung |
| 7 | Drehgelenk | 37 | Öffnung |
| 8 | Zapfen | 38 | Schenkel |
| 9 | Halterung | 39 | Pfeil |
| 10 | Ausnehmung | | |
| 11 | Stift | | |
| 12 | Federklammer | | |
| 13 | Ausnehmung | | |
| 14 | Nut | | |
| 15 | Bohrung | | |
| 16 | Trennsteg | | |
| 17 | Halterung | | |
| 18 | Stift | | |
| 19 | Gleitkufe | | |
| 20 | Abschrägung | | |
| 21 | Rastelement | | |
| 22 | Ausnehmung | | |
| 23 | Anschlagnocken | | |
| 24 | Anschlagnocken | | |
| 25 | Anschlageinsatz | | |
| 26 | Ausnehmung | | |
| 27 | Ausnehmung | | |
| 28 | Rand | | |
| 29 | Schlitz | | |
| 30 | Ausnehmung | | |

## Patentansprüche

1. Energieführungskette zum Führen von Energieleitern, insbesondere Kabel oder Schläuche von einem festen Anschluß zu einem beweglichen Verbraucher, bestehend aus einer Vielzahl von Kettengliedern (1), die aus zwei im Abstand voneinander und parallel zueinander angeordneten Kettenlaschen (2,3), zwei die Kettenlaschen (2,3) untereinander verbindenden Traversen (4,5) und mindestens einem zwischen den Traversen (4,5) angeordneten Trennsteg (16) bestehen,
**dadurch gekennzeichnet**,
daß die Traversen (4,5) auf einer Seite eine in Längsrichtung verlaufende Nut (14) haben,
daß in der Nut (14) eine Vielzahl von Bohrungen (15) angeordnet ist,
daß der Trennsteg (16) an seinem oberen und unteren Ende eine Halterung (17) mit wenigstens einem Stift (18) aufweist, dessen Länge der Tiefe der Nut (14) entspricht und
daß die Halterung (17) des Trennsteges (16) U-förmig ausgebildet ist und Hinterschneidungen hat, in die die Traverse (4,5) mit außen oder innen liegender Nut (14) einsteckbar ist.

2. Energieführungskette nach Anspruch 1, dadurch gekennzeichnet, daß die Traversen (4,5) auf ihrer Gesamtlänge einen abgeflachten Querschnitt aufweisen.

3. Energieführungskette nach Anspruch 1, dadurch gekennzeichnet, daß die Halterung (17) zwei Schenkel (38) hat, die quer zur Längsrichtung des Trennsteges (16) federelastisch sind, und daß der Stift (18) auf dem Trennsteg (16) in gleichem Abstand von den Schenkeln (38) angeordnet ist.

## Claims

1. A power guide chain for guiding power conductors, in particular cables or pipes from a fixed terminal to a movable consumer, consisting of a plurality of chain links (1) which consist of two link plates (2, 3) which are arranged parallel to and spaced from each other, two cross-pieces (4, 5) which join together the link plates (2, 3) and at least one separating piece (16) arranged between the cross-pieces (4, 5),
characterised in that,
the cross-pieces (4, 5) have a longitudinally extending groove (14) on one side,
a plurality of bores (15) are arranged in the groove (14),
the separating piece (16) has a mounting means (17) with at least one pin (18) at its top and bottom end, the length of which pin corresponds to the depth of the groove (14), and
the mounting means (17) of the separating piece (16) is U-shaped and has undercut portions into which the cross-pieces (4, 5) can be inserted with outwardly or inwardly disposed groove (14).

2. A power guide chain according to Claim 1, characterised in that the cross-pieces (4, 5) have a flattened cross-section over the entire length thereof.

3. A power guide chain energy guidance network according to Claim 1, characterised in that the mounting means (17) has two limbs (38) which are resilient transversely to the longitudinal extent of the separating piece (16), and the pin (18) is arranged on the separating piece (16) at an equal spacing from the limbs (38).

## Revendications

1. Chaîne de guidage d'énergie pour guider des conducteurs d'énergie, en particulier des câbles ou des tuyaux flexibles, d'un raccord fixe à un organe utilisateur mobile, ladite chaîne étant formée d'une pluralité de maillons (1) qui sont constitués de deux flasques (2, 3), disposés à distance l'un de l'autre et parallèlement entre eux, de deux traverses (4, 5) qui relient les flasques (2, 3) entre eux, et d'au moins une barrette de séparation (16) disposée entre les traverses (4, 5), caractérisée en ce que les traverses (4, 5) comportent, sur un côté, une gorge (14) qui s'étend dans le sens longitudinal, en ce qu'une pluralité de perçages (15) est pratiquée dans la gorge (14), en ce que la barrette de séparation (16) comporte, à ses extrémités supérieure et inférieure, un support (17) pourvu d'au moins une broche (18) dont la longueur correspond à la profondeur de la gorge (14), et en ce que le support (17) de la barrette de séparation (16) présente la forme d'un U et comporte des décrochements, dans lesquels peut s'emboîter la traverse (4, 5) munie d'une gorge extérieure ou intérieure (14).

2. Chaîne de guidage d'énergie selon la revendication 1, caractérisée en ce que les traverses (4, 5) présentent, sur toute leur longueur, une section transversale aplatie.

3. Chaîne de guidage d'énergie selon la revendication 1, caractérisée en ce que le support (17) comporte deux branches (38) qui possèdent l'élasticité d'un ressort transversalement au sens longitudinal de la barrette de séparation (16), et en ce que la broche (18) est disposée sur la barrette de séparation (16) à égale distance des branches (38).
